# Europäisches Patentamt

# European Patent Office

# Office européen des brevets

(19)

(11) Numéro de publication: **0 199 645**
**B1**

(12) **FASCICULE DE BREVET EUROPEEN**

---

(45) Date de publication du fascicule du brevet:
**20.12.89**

(21) Numéro de dépôt: **86400834.7**

(22) Date de dépôt: **17.04.86**

(51) Int. Cl.⁴: **G 01 N 1/20,** G 01 N 30/20,
G 01 N 30/24

---

(54) Dispositif automatique de micro-échantillonnage et d'injection de fluides sous pression.

---

(30) Priorité: **19.04.85 FR 8505999**

(43) Date de publication de la demande:
**29.10.86 Bulletin 86/44**

(45) Mention de la délivrance du brevet:
**20.12.89 Bulletin 89/51**

(84) Etats contractants désignés:
**AT BE CH DE FR GB IT LI NL SE**

(56) Documents cités:
**FR-A- 2 067 722**
**FR-A- 2 476 311**
**US-A- 3 166 939**
**US-A- 3 412 749**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Richon, Dominique, 17, rue de Montmélian, F-77210 Samoreau (FR)**
Inventeur: **Laugier, Serge, 58, rue de l'Ecluse -Bât. AB, F-77000 Melun (FR)**

(74) Mandataire: **Bruder, Michel, 10 rue de la Pépinière, F-75008 Paris (FR)**

---

## Description

La présente invention concerne un dispositif automatique de micro-échantillonnage et d'injection d'un fluide sous pression en vue d'une analyse, par exemple par chromatographie, après transfert de l'échantillon de fluide dans le flux d'un vecteur liquide ou gazeux.

Le prélèvement d'échantillons d'un fluide sous haute pression est extrêmement délicat et les procédés couramment utilisés pour ces prélèvements présentent de nombreux inconvénients qui ont été indiqués dans le brevet FR-A-2476311 de la demanderesse. Ce brevet décrit un dispositif de prélèvement d'échantillons d'un produit gazeux ou liquide sous pression comprenant une première canalisation de traversée pour le produit à échantillonner, une seconde canalisation de traversée pour le vecteur gazeux ou liquide, un passage de communication entre ces deux canalisations et un organe commandable d'obturation normale et d'ouverture transitoire du passage de communication, cette ouverture ayant lieu uniquement durant la période de prélèvement de l'échantillon, et des moyens de chauffage. Un tel dispositif permet d'éviter les inconvénients entraînés par les procédés connus antérieurement et il apporte en outre un moyen de contrôle automatique des procédés de fabrication dans une boucle: échantillonnage à la sortie d'un réacteur-analyse des échantillons-commande d'optimisation du fonctionnement du réacteur.

Un tel dispositif connu s'est révélé être un outil extrêmement précieux en ce qui concerne le prélèvement seul. Toutefois avec un tel dispositif les échantillons prélevés doivent être véhiculés par un vecteur, ce qui est difficile ou voire impossible en chromatographie en phase gazeux si l'échantillon prélevé est un liquide constitué de composés à hauts points d'ébullition et si le vecteur est un gaz à température nettement inférieure au point d'ébullition d'un ou plusieurs des composés du mélange (une vaporisation lente ou imparfaite dans le circuit d'un chromatographe en phase gazeuse, utilisé comme appareil d'analyse de l'échantillon, conduit à une analyse imprécise ou fausse).

Un but de la présente invention est de fournir un dispositif du type précité permettant l'injection et la vaporisation d'un liquide dans un circuit d'analyse.

Ce but est atteint, suivant l'invention, du fait que le passage de communication est constitué par un tube capillaire débouchant respectivement, à ses première et seconde extrémités, dans les première et seconde canalisation qui sont formées respectivement dans deux pièces séparées, isolées thermiquement l'une de l'autre, à savoir une tête de prélèvement et un corps, portant les moyens de chauffage de la partie aval du passage de communication aboutissant à sa seconde extrémité. Ces moyens de chauffage sont avantageusement constitués par une résistance électrique.

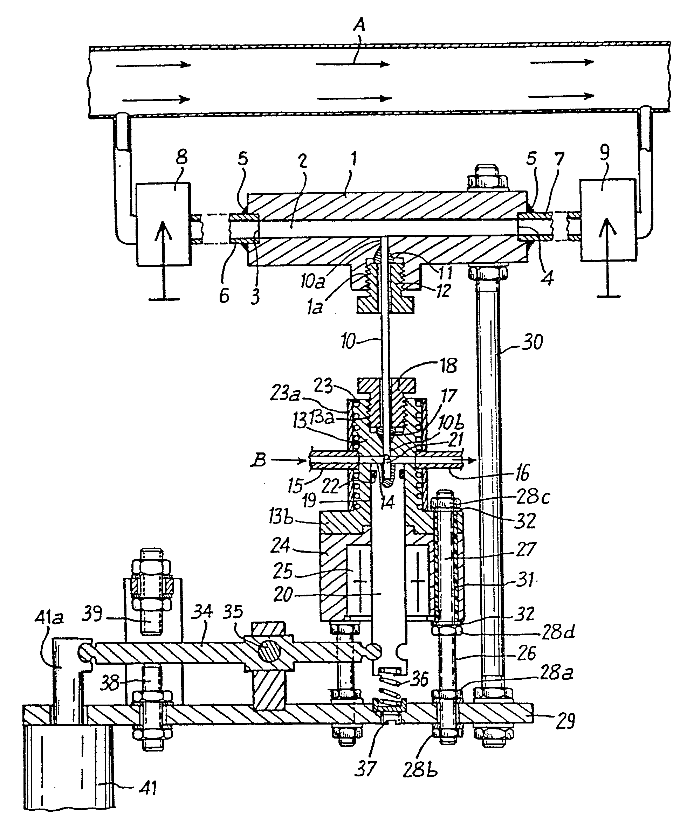

On décrira ci-après, à titre l'exemple non limitatif, une forme d'exécution de la présente invention, en référence au dessin annexé qui est une vue une coupe axiale d'un dispositif automatique de micro-échantillonnage et d'injection d'un fluide sous pression suivant l'invention.

Le dispositif suivant l'invention représenté sur le dessin est destiné à être branché en dérivation sur une canalisation parcourue par un produit liquide ou gazeux A, dont l'écoulement est matérialisé par les flèches, ou bien encore directement sur un récipient contenant ce produit A. Ce dispositif comprend plusieurs parties distinctes assemblées entre elles. Une première partie, formant tête de prélèvement, est constituée par une pièce métallique 1, de forme allongée, qui est traversée axialement de part en part par un alésage 2 constituant une canalisation de traversée pour le produit A à échantillonner. Aux deux extrémités 3 et 4 de la canalisation de traversée 2 sont fixées, par exemple, par des soudures 5, des tubulures respectives 6 et 7 qui sont raccordées, par l'intermédiaire de vannes de fermeture 8 et 9, à la canalisation principale dans laquelle s'écoule le produit A.

La tête de prélèvement 1 est percé transversalement d'un passage dans lequel est engagée et fixée une partie extrême 10a d'un tube capillaire 10. Ce tube capillaire 10 débouche ainsi, à son extrémité, dans la canalisation de traversée 2. Il peut être fixé en position par tous moyens appropriés, par exemple au moyen d'un ensemble cône-bague 11 écrasé par une vis 12 qui est traversée de part en part axialement par le tube capillaire 10 et qui est vissée dans un trou borgne taraudé 1a formé dans la surface latérale de la tête de prélèvement 1.

Le dispositif suivant l'invention comprend par ailleurs un corps 13, de forme cylindrique, dans lequel est engagée est fixée l'autre partie extrême 10b du tube capillaire 10. Le corps 13 qui est situé à distance de la tête de prélèvement 1 et est ainsi isolé thermiquement de cette dernière, est traversé de part en part par un conduit 14 constituant une canalisation de traversée pour un vecteur liquide ou gazeux B. Ce conduit 14 est raccordé, à ses deux extrémités, à deux tubes soudés 15 et 16 qui permettent de relier le dispositif à un instrument d'analyse, tel qu'un chromatographe. Le corps 13 est percé d'un trou transversal qui débouche dans la canalisation de traversée 14 et dans lequel est engagée l'autre partie extrême 10b du tube capillaire 10 qui débouche ainsi perpendiculairement à la canalisation de traversée 14. Cette partie extrême est fixée dans le corps 13, par exemple au moyen d'un ensemble cône-bague 17 et d'une vis 18 qui est vissée dans un trou borgne taraudé 13a ménagé dans le corps 13. Le trou borgne taraudé 13a du corps 13 est situé en regard du trou borgne 1a de la pièce métallique 1, avec lequel il est disposé coaxialement. Cette disposition particulière qui fait que le tube capillaire 10 est rectiligne, n'est toutefois pas limitative et les deux trous taraudés 1a et 13a pourraient occuper des positions relatives quelconques, le tube capillaire étant alors courbé de la manière appropriée.

Le corps 13 présente par ailleurs un alésage 19 qui est disposé coaxialement avec le tube capillaire 10, de l'autre côté de la canalisation de traversée 14. Dans cet alésage 19 est montée à coulissement axial une tige métallique 20 qui porte à son extrémité un organe d'obturation constitué, par exemple, par une aiguille métallique effilée axiale 21 dont la partie pointue s'engage normalement dans l'orifice de la partie extrême 10b du tube capillaire 10.

Suivant une variante cette aiguille 21 pourrait être remplacée par un autre organe d'obturation en une matière relativement souple et élastique, tel qu'un petit cylindre en matière plastique connue sous le nom de «VITON», «KALREZ» (marques déposées) etc.

La tige 20 coulisse d'une manière étanche dans l'alésage 19, l'étanchéité étant assuré par un joint annulaire 22, par exemple en polymère, lequel est logé dans une gorge annulaire transversale ménagée dans la surface latérale de la tige 20.

Le corps métallique 13 dans lequel est engagée et fixée la partie extrême 10b du tube capillaire 10, comporte des moyens de chauffage qui peuvent être avantageusement constitués par une résistance électrique hélicoïdale 23 qui entoure au moins la partie du corps 13 dans laquelle est logée la partie extrême 10b du tube capillaire 10. Cette résistance peut être logée dans une gorge hélicoïdale ménagée dans la surface externe de la partie du corps 13 entourant le trou taraudé 13a et la partie extrême 10b du tube 10. Dans la forme d'exécution illustrée sur le dessin, cette résistance de chauffage 23 entoure également la partie du corps 13 dans laquelle est engagée la partie extrême de la tige coulissante 20. Cette résistance de chauffage électrique 23 permet une surchauffe de l'échantillon prélevé, lorsque cela est nécessaire. De préférence la résistance de chauffage électrique 23 est enveloppée dans une gaine externe d'isolation thermique 23a.

Le corps 13 est prolongé, à l'opposé du trou borgne taraudé 13a, par une bride 13b sur laquelle est fixée une culasse métallique 24 qui sert de support à un guide tubulaire 25 qui est de préférence constitué par une douille à billes entourant la tige coulissante 20, pour limiter les forces de frottement s'opposant à la translation de la tige 20. L'assemblage du corps 13 et de la culasse 24 est réalisé au moyen de plusieurs ensembles 26, par exemple au nombre de trois, comprenant chacun une tige filetée 27 traversant la bride 13b et la culasse 24 et des écrous 28a, 28b, 28c, 28d vissés sur cette tige. Chaque tige filetée 27 est fixée, au moyen de la paire d'écrous 28a, 28b, sur une platine 29 elle-même assemblée avec la pièce 1 par au moins trois ensembles 30 du type tige filetée et écrous. Par ailleurs elle est rendue solidaire de l'ensemble formé par le corps 13 et la culasse 24 au moyen de l'autre paire d'écrous 28c, 28d.

Une isolation thermique entre l'ensemble corps 13 culasse 24 et la platine 29 est réalisée grâce à l'utilisation de canons en graphite 31, engagés sur chaque tige filetée 27 dans la zone où celle-ci traverse le corps 13 et la culasse 24, et de rondelles en graphite 32 enfilées sur la tige 27 et interposées entre les écrous 28c, 28d et les parties en regard du corps 13 et de la culasse 24.

La commande du mouvement axial de la tige coulissante 20 est réalisée par un dispositif d'actionnement de tout type approprié porté par la platine 29 notamment ce dispositif d'actionnement peut comprendre un levier à deux bras 34 qui est monté à pivotement sur la platine 29 autour d'un axe 35. Un bras de levier 34 est accouplé à la tige 20, par exemple au moyen d'une tête extrême sphérique s'engageant dans une gorge de la tige 20. Cette tige 20 est repoussée vers le corps 13, en position de fermeture, par un ressort 36 interposé entre sa face frontale et la platine 29. Ce ressort 36 prend appui sur une vis de réglage de tension 37 qui est vissée dans la platine 29.

L'autre bras du levier 34 s'étend entre deux butées réglables 38, 39, portées par la platine 29, pour limiter la course d'ouverture et de fermeture de l'aiguille obturatrice 21 et l'extrémité de ce bras est accouplée à la tige 41a d'un vérin 41 qui peut être asservi par un programmateur (temporisateur ou microprocesseur).

En position de repos tous les éléments mobiles du dispositif occupent les positions représentées sur le dessin. Dans ce cas la tige coulissante 20 est repoussée vers le corps 13 par le ressort 36 de telle façon que l'aiguille capillaire 10, en obturant celui-ci. A cet effet la force exercée par le ressort 36 est ajustée de manière à être supérieure à la force antagoniste qui tend à écarter l'aiguille 21 du tube capillaire 10 et qui est engendrée par la pression du fluide dans ce tube capillaire. En position de fermeture le levier pivotant 34 est en appui sur la butée réglable inférieure 38 qui sert ainsi au réglage de la force exercée par l'aiguille 21 contre l'orifice du tube capillaire 10, qui cède quelque peu élastiquement, en limitant l'effort exercé par le ressort 40.

Lorsqu'il est nécessaire de prélever un échantillon, le vérin 41 est actionné par le programmateur, ce qui provoque la sortie de sa tige 41a. Ceci entraîne un pivotement du levier 34 dans le sens des aiguilles d'une montre, autour de l'axe 35, et un coulissement vers le bas de la tige 20 et de l'aiguille obturatrice 21. Du fait que son extrémité inférieure se trouve alors ouverte, le tube capillaire 10 devient un passage de communication entre la canalisation de traversée 2 pour le produit A et la canalisation de traversée 14 pour le vecteur B. Il en résulte que, pendant toute la durée de l'ouverture de l'orifice du tube capillaire 10, une certaine quantité du produit A passe dans la canalisation de traversée 14 et est entraînée par le vecteur B vers un instrument d'analyse. Le mouvement d'ouverture par coulissement axiale de la tige 20 et de l'aiguille 21 est limité par la venue en butée du levier pivotant 34 contre la butée réglable supérieure 39. Le réglage de cette butée permet par conséquent de régler corrélativement la taille de l'échantillon prélevé.

On voit, d'après la description qui précède, que lors de l'échantillonnage le fluide qui débouche à l'extrémité 10b du tube capillaire 10, pour pénétrer dans la canalisation de traversée 14 du vecteur B, peut être chauffé au moyen de la résistance 23, si sa vaporisation est nécessaire, et il est balayé immédiatement par le vecteur B. Le meilleur résultat est obtenu lorsque le tube capillaire 10 débouche perpendiculairement à la canalisation de traversée 14 du vecteur B, sensiblement au centre du corps 13.

## Revendications

1. Dispositif automatique de micro échantillonnage et d'injection d'un fluide sous pression (A) en vue d'une analyse, par exemple par chromatographie, après transfert de l'échantillon du fluide dans le flux d'un vecteur liquide ou gazeux (B), comprenant une première canalisation de traversée (2) pour le fluide à échantillonner (A), une seconde canalisation de traversée (14) pour le vecteur gazeux ou liquide (B), un passage de communication (10) entre ces deux canalisations (2, 14) et un organe commandable (21) d'obturation normale et d'ouverture transitoire du passage de communication, cette ouverture ayant lieu uniquement durant la période de prélèvement de l'échantillon, et des moyens de chauffage (23), caractérisé en ce que le passage de communication est constitué par un tube capillaire (10) débouchant respectivement, à ses première et seconde extrémités (10a, 10b), dans les première et seconde canalisations (2, 14) qui sont formées respectivement dans deux pièces séparées, isolées thermiquement l'une de l'autre, à savoir une tête de prélèvement (1) et un corps (13), ce corps (13) portant les moyens de chauffage (23) de la partie aval du passage de communication aboutissant à sa seconde extrémité (10b).

2. Dispositif suivant la revendication 1, caractérisé en ce que les moyens de chauffage électrique sont constitués par une résistance chauffante (23) entourant au moins la partie du corps (13) dans laquelle est engagée et fixée la seconde extrémité (10b) du tube capillaire (10).

3. Dispositif suivant l'une quelconque des revendications 1 et 2, caractérisé en ce que l'organe commandable d'obturation (21) est monté à l'extrémité d'une tige coulissante (20) sollicitée élastiquement par un ressort (36) en direction de la seconde extrémité (10b) du tube capillaire (10), de manière à être normalement appliqué sur cette extrémité et à obturer l'orifice du tube capillaire (10), et un dispositif d'actionnement (34, 41) est prévu pour faire coulisser la tige (20) de manière à écarter l'organe d'obturation (21) de l'orifice du tube capillaire (10), pendant la période de prélèvement d'un échantillon.

4. Dispositif suivant la revendication 3, caractérisé en ce que le tube capillaire (10) débouche perpendiculairement à la seconde canalisation de traversée (14) pour le vecteur (B) dans le corps (13).

5. Dispositif suivant l'une quelconque des revendications 3 et 4, caractérisé en ce que la tige (20) est montée dans un guide tubulaire (25) porté par une culasse (24) fixée au corps (13), l'ensemble corps (13) culasse (24) est porté par une platine (29), par l'intermédiaire d'ensembles de fixation (26) avec interposition d'organes d'isolation thermique (31, 32), la platine (29) est reliée à la tête de prélèvement (1) par des organes de liaison (30) et elle porte le dispositif d'actionnement (34, 41) pour la tige coulissante (20).

6. Dispositif suivant l'une quelconque des revendications 3 à 5 caractérisé en ce que le dispositif d'actionnement (34, 41) comprend un levier à deux bras (34) qui est monté à pivotement autour d'un axe (35), un bras du levier (34) étant accouplé à la tige (20), tandis que l'autre bras du levier (34) s'étend entre deux butées réglables (38, 39) limitant la course d'ouverture et de fermeture de l'organe d'obturation (21), l'extrémité de ce bras de levier étant accouplée à la tige (41a) d'un vérin (41) qui peut être asservi par un programmateur par exemple par un temporisateur ou un microprocesseur.

7. Dispositif suivant la revendication 6, caractérisé en ce que la force du ressort (36) sollicitant la tige coulissante (20) est réglable au moyen d'une vis (37) vissée dans la platine (29) et en position de fermeture le levier pivotant (34) est en appui sur une butée réglable (38) qui sert ainsi au réglage de la force exercée par l'organe d'obturation (21) contre l'orifice du tube capillaire (10), par limitation de l'effort exercé par le ressort (36).

8. Dispositif suivant l'une quelconque des revendications précédentes, caractérisé en ce que l'organe d'obturation (21) est constitué par une aiguille métallique effilée engagée dans l'orifice du tube capillaire (10).

## Patentansprüche

1. Automatische Vorrichtung zur Mikroprobenahme und Eingabe von unter Druck stehenden Fluiden (A) bei einer Analyse, beispielsweise durch Chromatographie, nach der Überführung der Fluidprobe in den Fluß eines flüssigen oder gasförmigen Vektors (B), mit einer ersten Durchleitung (2) für das Fluid (A), dessen Probe entnommen werden soll, einer zweiten Durchleitung (14) für den gasförmigen oder flüssigen Vektor (B), einem Verbindungskanal (10) zwischen diesen beiden Kanalsystemen (2, 14) und einem steuerbaren Organ (21) zum normalen Verschluß des Verbindungskanals (10) und zu dessen zeitweiliger Öffnung, wobei diese Öffnung nur während der Periode stattfindet, in der eine Probe genommen wird, und mit Heizmitteln (23), dadurch gekennzeichnet, daß der Verbindungskanal durch ein Kapillarrohr (10) gebildet wird, das mit seinem ersten und seinem zweiten Ende (10a, 10b) in die erste Durchleitung (2) bzw. die zweite Durchleitung (14) ausmündet, die von zwei voneinander getrennten, thermisch gegeneinander isolierten Teilen gebildet werden, nämlich einem Entnahmekopf (1) und einem Körper (13), der an dem stromab gelegenen, an sein zweites Ende (10b) anschließenden Abschnitt des Verbindungskanals die Heizmittel (23) trägt.

2. Vorrichtung nach Anspruch 1, dadurch gekennzeichnet, daß die elektrischen Heizmittel von einem Heizwiderstand (23) gebildet werden, der wenigstens den Teil des Körpers (13) umschließt, in den das zweite Ende (10b) des Kapillarrohrs (10) eingreift und in dem es befestigt ist.

3. Vorrichtung nach einem der Ansprüche 1 oder 2, dadurch gekennzeichnet, daß das steuerbare Verschlußorgan (21) am Ende eines Schiebers (20) angebracht ist, der durch eine Feder (36) in Richtung auf das zweite Ende (10b) des Kapillarrohrs (10) derart belastet ist, daß er normalerweise an diesem Ende anliegt und die Mündung des Kapillarrohrs (10) abdeckt, und daß eine Betätigungsvorrichtung (34, 41) vorgesehen ist, um den Schieber (20) derart zu verschieben, daß während der Periode der Probenahme das Verschlußorgan (21) von der Mündung des Kapillarrohrs (10) entfernt wird.

4. Vorrichtung nach Anspruch 3, dadurch gekennzeichnet, daß das Kapillarrohr (10) im Körper (13) rechtwinklig in die zweite Durchleitung (14) für den Vektor (B) ausmündet.

5. Vorrichtung nach einem der Ansprüche 3 oder 4, dadurch gekennzeichnet, daß der Schieber (20) in einer rohrförmigen Führung (25) geführt ist, die von einem am Körper (13) befestigten Joch (24) getragen wird, daß die aus dem Körper (13) und dem Joch (24) bestehende Baugruppe von einer Platte (29) unter Einfügung einer Befestigungsanordnung (26) mit Zwischenschaltung von Organen (31, 32) zur thermischen Isolation getragen wird, und daß die Platte (29) mit dem Entnahmekopf (1) durch Verbindungselemente (3) verbunden ist und die Betätigungsvorrichtung (34, 41) für den Schieber (20) trägt.

6. Vorrichtung nach einem der Ansprüche 3 bis 5, dadurch gekennzeichnet, daß die Betätigungsvorrichtung (34, 41) einen zweiarmigen Hebel (34) umfaßt, der um eine Achse (35) verschwenkbar gelagert ist, daß ein Arm des Hebels (34) mit dem Schieber (20) gekuppelt ist, während der andere Arm des Hebels (34) sich zwischen zwei einstellbaren Anschlägen (38, 39) erstreckt, die die Öffnungs- und Schließbewegung des Verschlußorgans (21) begrenzen, und daß das Ende dieses Hebelarms mit der Stellstange (41a) eines Stellzylinders (41) verbunden ist, der durch eine Programmsteuerung, beispielsweise eine Zeitsteuerung oder einen Mikroprozessor, gesteuert wird.

7. Vorrichtung nach Anspruch 6, dadurch gekennzeichnet, daß die Kraft der den Schieber (20) belastenden Feder (34) mittels einer in die Platte (29) eingeschraubten Schraube (37) einstellbar ist und daß in der Schließstellung der schwenkbare Hebel (34) an einem einstellbaren Anschlag (38) anliegt, der so zur Regelung der durch das Verschlußorgan (21) gegen die Mündung des Kapillarrohrs (10) ausgeübten Kraft durch Begrenzung der von der Feder (36) ausgehenden Kraft dient.

8. Vorrichtung nach einem der vorhergehenden Ansprüche, dadurch gekennzeichnet, daß das Verschlußorgan (21) durch eine zugespitzte metallische Nadel gebildet wird, die in die Mündung des Kapillarrohrs (10) eingreift.

**Claims**

1. Automatic device for the micro-sampling and injection of a pressurized fluid (A) with a view to analysis, for example by chromatography after transfer of the fluid sample into the flow of a supporting liquid or gas (B), comprising a first through duct (2) for the fluid (A) to be sampled, a second through flow duct (14) for the supporting gas or liquid (B), a communication passage (10) between said two ducts (2, 14) and a controllable member (21) for normally closing and temporarily opening the communication passage, such opening taking place only during the sample taking period, and heating means (23), characterized in that said communication passage is formed by a capillary tube (10) opening respectively, at its first and second ends (10a, 10b), into the first and second ducts (2, 14) which are formed respectively in two separate parts, thermally isolated from each other, namely a sampling head (1) and a body (13), said body (13) supporting the heating means of the downstream part of the communication passage ending at its second end (10b).

2. The device as claimed in claim 1, characterized in that said electric heating means are formed by a heating resistance (23) surrounding at least the portion of said body (13) in which the second end (10b) of said capillary tube (10) is engaged and fixed.

3. The device as claimed in one of claims 1 and 2, characterized in that said controllable closing member (21) is mounted at the end of a sliding rod (20) resiliently urged by a spring (36) towards the second end (10b) of said capillary tube (10) so as to be normally applied against this end and to close the opening of said capillary tube (10), and an actuating device (34, 41) is provided for causing said rod (20) to slide so as to move said closing member (21) away from the opening of said capillary tube (10), during the sampling period.

4. The device as claimed in claim 3, characterized in that said capillary tube (10) opens perpendicularly into said second duct (14) through which said supporting fluid (B) passes in the body (13).

5. The device as claimed in one of claims 3 and 4, characterized in that said rod (20) is mounted in a tubular guide (25) carried by a yoke (24) fixed to the body (13), the body-yoke assembly (13, 24) is supported by a plate (29) throuch fixing assemblies (26) with intercalation of thermal insulating members (31, 32), said plate (29) is connected to said sampling head (1) by connection means (30) and it supports the actuating device (34, 41) for said sliding rod (20).

6. The device as claimed in one of claims 3 to 5, characterized in that said actuating device (34, 41) comprises a lever (34) with two arms which is mounted for pivoting about an axis (35), one arm of said lever (34) being coupled to said rod (20), whereas the other arm of said lever (34) extends between two adjustable stops (38, 39) limiting the opening and closure travel of said closing member (21), the end of this lever arm being coupled to the rod (41a) of actuating cylinder (41) which may be controlled by a programmator (timer or microprocessor).

7. The device according to claim 6, characterized in that the force of the spring (36) urging said sliding rod (20) is adjustable by means of a screw (37) screwed into said plate (29) and in the closure position, said pivoting lever (34) bears against an adjustable stop (38) which thus is used for adjusting the force exerted by said closure member (21) against the opening of said capillary tube (10), by limiting the force exerted by said spring (36).

8. The device as claimed in one of the preceding claims, characterized in that said closing member (21) is formed by a tapered metal needle engaged in the opening of said capillary tube (10).

# 1/1